# FASCICULE DE BREVET EUROPEEN

(11) **EP 4 519 138 B1**
(45) Date de publication et mention de la délivrance du brevet: **02.09.2026**
(21) Numéro de dépôt: 23720645.3
(22) Date de dépôt: 29.03.2023
(51) Int. Cl.: B60W 30/18, G06V 20/56

(54) **PROCÉDÉ ET DISPOSITIF DE CONTRÔLE D'UN SYSTÈME D'AIDE À LA CONDUITE DE VÉHICULE EN FONCTION DE LA DÉTECTION D'UN PANNEAU DE SIGNALISATION ET D'UN CHANGEMENT DE VOIE**
VERFAHREN UND VORRICHTUNG ZUR STEUERUNG EINES FAHRERASSISTENZSYSTEMS EINES FAHRZEUGS AUF BASIS DER ERKENNUNG EINES VERKEHRSZEICHENS UND EINES SPURWECHSELS
METHOD AND DEVICE FOR CONTROLLING A VEHICLE DRIVER-ASSISTANCE SYSTEM ON THE BASIS OF THE DETECTION OF A ROAD SIGN AND A LANE CHANGE

(30) Priorité: 03.05.2022 FR 2204170
(43) Date de publication de la demande: 12.03.2025
(73) Titulaire: Stellantis Auto SAS, 78300 Poissy (FR)
(72) Inventeur: EL HANBALI, Hamza, Sidi Maarouf Casablanca, 20580 (MA); ET-THAQFY, Yassine, Sidi El Bernoussi Casablanca, 20620 (MA)
(74) Mandataire: ESIP
(86) Numéro de dépôt international: PCT/FR2023/050446
(87) Numéro de publication internationale: WO 2023/214138

(56) Documents cités:
- EP-A1- 3 846 073
- DE-A1- 102009 023 444
- JP-B1- 6 342 104
- US-A1- 2014 032 047
- US-A1- 2017 113 673

## Description

### Domaine technique

La présente invention concerne les procédés et dispositifs de contrôle d'un système d'aide à la conduite, dit système ADAS, d'un véhicule, par exemple un véhicule automobile. L'invention concerne plus particulièrement un procédé et un dispositif de contrôle d'un système de changement semi-automatique de voie de circulation, dit système SALC, d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de changement semi-automatique de voie de circulation, dit système SALC (de l'anglais « Semi-Automatic Lane Change ») a pour fonction première d'assister le conducteur d'un véhicule lorsque le conducteur souhaite changer de voie de circulation. A la détection de l'activation des clignotants d'un côté du véhicule pour indiquer son intention de changer de voie depuis une voie de circulation courante vers une voie de circulation cible du côté où les clignotants ont été activés par le conducteur, le système SALC opère le changement de voie après avoir effectués quelques contrôles. Parmi ces contrôles, le système SALC vérifie certaines conditions relatives à la voie de circulation cible telles que :
- la qualité de la détection des lignes de marquage au sol séparant la voie de circulation courante et la voie de circulation cible, cette qualité devant être supérieure à un seuil pour autoriser le changement de voie semi-automatique ;
- le type associé à cette ligne, la ligne de marquage au sol devant être de type discontinue pour autoriser le changement semi-automatique de voie de circulation ; et
- une probabilité d'existence de la ligne de marquage au sol de type discontinue, une telle probabilité devant être supérieure à un seuil pour autoriser le changement de voie semi-automatique.

En outre, l'état de la technique est connu des documents US2017113673A1 et JP6342104B1.

Ces contrôles s'avèrent cependant insuffisants pour couvrir toutes les situations de vie ou de roulage du véhicule, certaines situations où le changement de voie devrait être interdit ou inhibé restant autorisé par le système SALC.

### Résumé de la présente invention

Un objet de la présente invention est de résoudre au moins l'un des problèmes de l'arrière-plan technologique décrit précédemment.

Un autre objet de la présente invention est d'améliorer le fonctionnement d'un système ADAS, par exemple un système SALC, d'un véhicule.

Selon un premier aspect, la présente invention concerne un procédé de contrôle d'un système d'aide à la conduite, dit système ADAS correspondant à un système de changement semi-automatique de voie, dit système SALC, d'un véhicule, le véhicule circulant sur une route comprenant une pluralité de voies ayant un même sens de circulation, le procédé comprenant les étapes suivantes :
- obtention d'une première information représentative de détection d'un panneau de circulation déterminé ;
- réception de données représentatives de lignes de marquage au sol latérales délimitant latéralement une voie de circulation courante du véhicule au cours d'un déplacement du véhicule sur la route ;
caractérisé en ce qu'il comprend les étapes de :
- détermination d'une représentation polynomiale d'une ligne de marquage au sol, dite ligne de référence, en fonction des données au cours du déplacement du véhicule, la ligne de référence correspondant à une des lignes de marquage au sol latérales d'un côté déterminé du véhicule ;
- détermination d'une deuxième information représentative de détection d'un changement de la ligne de référence au cours du déplacement du véhicule en fonction d'un coefficient de la représentation polynomiale associé au monôme de degré 0 de la représentation polynomiale ;
- une désactivation du système ADAS pour une distance déterminée de parcours du véhicule lorsque la première information est représentative de détection d'un panneau de circulation de type « CEDEZ LE PASSAGE » ; et
- une réactivation du système ADAS lorsqu'un changement de ligne de référence est détecté via la deuxième information suivant la désactivation du système ADAS.

La détermination d'un changement dans la représentation polynomiale des lignes de marquage au sol permet de détecter si le véhicule a effectué un changement de voie de circulation ou pas.

La prise en compte de cette information de changement de voie en plus de l'information relative à la détection d'un panneau de signalisation permet d'affiner le contrôle du système ADAS, par exemple un système SALC, notamment dans des situations de vie particulières où la prise en compte de ces deux informations permet d'améliorer le fonctionnement du système ADAS en l'activant plus souvent, tout en maintenant un niveau de sécurité élevé.

Selon une variante, la deuxième information est représentative d'une variation du coefficient.

Selon une autre variante, la deuxième information est obtenue en dérivant une fonction représentative de la variation du coefficient en fonction du temps.

Selon une variante supplémentaire, un changement de ligne de référence pour le véhicule est détecté lorsqu'une amplitude de la variation est supérieure à un seuil.

Selon une variante additionnelle, les données sont reçues d'une première caméra embarquée dans le véhicule.

Selon une autre variante, la première information est obtenue à partir de :
- données reçues d'une deuxième caméra embarquée dans le véhicule ; et/ou
- données de cartographies associées à la route.

Selon un deuxième aspect, la présente invention concerne un dispositif de contrôle d'un système d'aide à la conduite, dit système ADAS, d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement un environnement d'un véhicule, selon un exemple de réalisation particulier et non limitatif de la présente invention ;
[Fig. 2] illustre schématiquement la variation d'un coefficient d'un polynôme représentatif d'une ligne de marquage au sol de l'environnement de la figure 1, selon un exemple de réalisation particulier et non limitatif de la présente invention ;
[Fig. 3] illustre schématiquement un dispositif configuré pour contrôler un système d'aide à la conduite du véhicule de la figure 1, selon un exemple de réalisation particulier et non limitatif de la présente invention ;
[Fig. 4] illustre un organigramme des différentes étapes d'un procédé de contrôle d'un système d'aide à la conduite du véhicule de la figure 1, selon un exemple de réalisation particulier et non limitatif de la présente invention.

### Description des exemples de réalisation

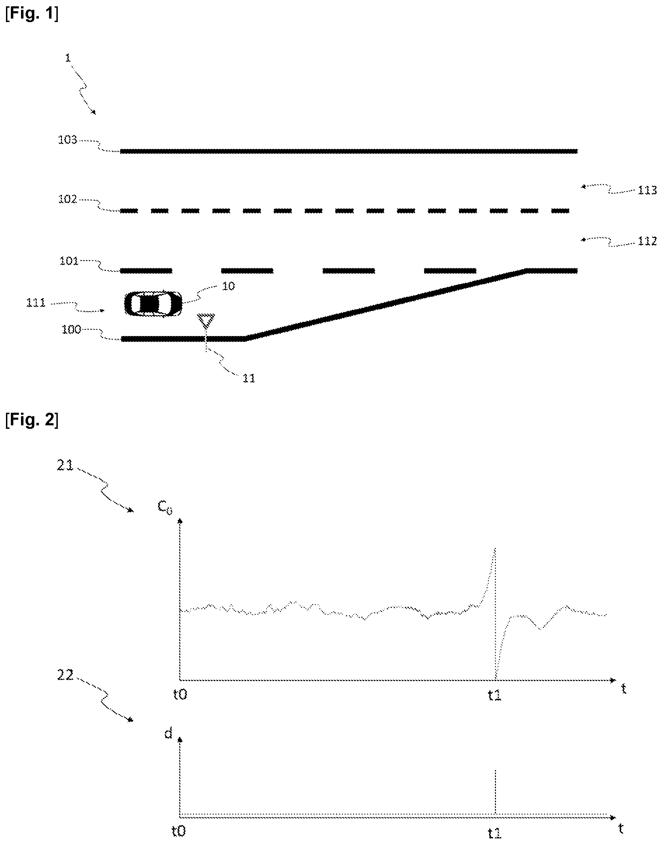

Un procédé et un dispositif de contrôle d'un système d'aide à la conduite, dit système ADAS, d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle d'un système d'aide à la conduite, dit système ADAS, par exemple un système de changement semi-automatique de voie de circulation, dit système SALC, ou un système de contrôle adaptatif de la vitesse, dit système ACC (de l'anglais « Adaptative Cruise Control »), d'un véhicule circulant sur une route ayant plusieurs voies ayant un même sens de circulation comprend l'obtention d'une première information représentative de la détection d'un panneau de signalisation routière, par exemple un panneau de type « CEDEZ LE PASSAGE ». Une telle première information est par exemple obtenue à partir de données d'une caméra du véhicule et/ou de données de cartographies de la route.

Des données représentatives de lignes de marquage au sol délimitant latéralement les voies de la route sont également reçues, par exemple d'une ou plusieurs caméras ayant dans leur champ de vision la chaussée de la route sur laquelle circule le véhicule. Ces données sont reçues au fur et à mesure du déplacement du véhicule le long de la route. Ces données sont traitées ou analysées pour déterminer une représentation polynomiale d'une des lignes de marquage au sol, appelée par la suite ligne de référence. Cette ligne de référence correspond par exemple à une des lignes latérales délimitant la voie de circulation courante du véhicule, par exemple la ligne à gauche (respectivement à droite) du véhicule selon le sens de déplacement du véhicule.

Une deuxième information représentative de la détection d'un changement de la ligne de référence au cours du déplacement du véhicule est déterminée en fonction d'un coefficient de la représentation polynomiale associé au monôme de degré 0 de la représentation polynomiale.

Le système ADAS est enfin contrôlé en fonction de la première information et de la deuxième information, par exemple selon des règles de contrôle déterminées fonction de la première et de la deuxième information.

Le coefficient varie notamment lorsqu'un changement de ligne de référence intervient, typiquement lorsque le véhicule change de voie de circulation courante. Le changement de voie de circulation courante ainsi détecté permet par exemple d'adapter le contrôle du système ADAS qui était jusqu'alors uniquement fonction du panneau de signalisation détecté.

La figure 1 illustre schématiquement un environnement 1 dans lequel évolue un véhicule 10, selon un exemple de réalisation particulier et non limitatif de la présente invention.

La figure 1 illustre un véhicule 10, par exemple un véhicule automobile, circulant sur une portion de route de l'environnement 1. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond à un véhicule circulant sous la supervision totale d'un conducteur ou circulant dans un mode autonome ou semi-autonome. Le véhicule 10 circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Les 5 niveaux d'autonomie de la classification de l'agence fédérale chargée de la sécurité routière sont :
- niveau 0 : aucune automatisation, le conducteur du véhicule contrôle totalement les fonctions principales du véhicule (moteur, accélérateur, direction, freins) ;
- niveau 1 : assistance au conducteur, l'automatisation est active pour certaines fonctions du véhicule, le conducteur gardant un contrôle global sur la conduite du véhicule ; le régulateur de vitesse fait partie de ce niveau, comme d'autres aides telles que l'ABS (système antiblocage des roues) ou l'ESP (électro-stabilisateur programmé) ;
- niveau 2 : automatisation de fonctions combinées, le contrôle d'au moins deux fonctions principales est combiné dans l'automatisation pour remplacer le conducteur dans certaines situations ; par exemple, le régulateur de vitesse adaptatif combiné avec le centrage sur la voie permet à un véhicule d'être classé niveau 2, tout comme l'aide au stationnement (de l'anglais « Park assist ») automatique ;
- niveau 3 : conduite autonome limitée, le conducteur peut céder le contrôle complet du véhicule au système automatisé qui sera alors en charge des fonctions critiques de sécurité ; la conduite autonome ne peut cependant avoir lieu que dans certaines conditions environnementales et de trafic déterminées (uniquement sur autoroute par exemple) ;
- niveau 4 : conduite autonome complète sous conditions, le véhicule est conçu pour assurer seul l'ensemble des fonctions critiques de sécurité sur un trajet complet ; le conducteur fournit une destination ou des consignes de navigation mais n'est pas tenu de se rendre disponible pour reprendre le contrôle du véhicule ;
- niveau 5 : conduite complètement autonome sans l'aide de conducteur dans toutes les circonstances.

Selon un exemple particulier de réalisation, le véhicule 10 circule selon un mode semi-autonome ou autonome, c'est-à-dire avec un niveau d'autonomie supérieur ou égal à 2 selon la classification ci-dessus.

Selon l'exemple de la figure 1, le véhicule 10 circule sur une route ou une portion de route comprenant plusieurs voies 111, 112 et 113. Le véhicule 10 circule par exemple à un premier instant temporel t0 sur la voie 111, laquelle correspond par exemple à une voie d'entrée ou d'insertion d'une route à accès réglementé (aussi appelé route à voies rapides) ou une voie d'entrée ou d'insertion d'autoroute. La voie 111 est prévue pour que le véhicule 10 s'insère sur la voie de circulation 112 située à gauche sur la voie d'insertion 111, avant de poursuivre son chemin potentiellement sur cette voie de circulation 112 ou sur une autre voie de circulation 113 située à gauche de la voie 112, selon les intentions du conducteur du véhicule 10 et/ou de la circulation sur ces voies de circulation 112, 113 et/ou de la présence d'obstacle (par exemple un véhicule circulant plus lentement que le véhicule 10).

Les notions de droite et de gauche sont définies selon le sens de circulation du véhicule 10. La voie de circulation 113 correspond selon l'exemple de la figure 1 à la voie « la plus rapide » et la voie de circulation 112 correspond selon cet exemple à la voie « la plus lente ». La voie « la plus lente » est à droite dans les pays où les véhicules circulent sur la voie de droite (pays tels que la France par exemple). La voie de circulation « la plus lente » est à gauche dans les pays où les véhicules circulent sur la voie de gauche (pays tels que le Royaume-Uni par exemple).

L'exemple de la figure 1 correspond à un exemple selon lequel les véhicules circulent à droite, comme en France. L'invention ne se limite cependant pas à un tel exemple et s'étend à toutes les configurations de route, incluant celles où les véhicules circulent à gauche.

Selon l'exemple de la figure 1, la portion de route correspond à une portion d'autoroute ou à une portion de route à voies rapides à plusieurs voies de circulation pour chaque sens de circulation. Les voies 112 et 113 correspondent par exemple à des voies de circulation alors que la voie 111 correspond à une voie d'insertion.

La voie 111 correspondant à une voie d'insertion est matérialisée à droite par une ligne de marquage au sol 100 continue et à gauche par une ligne de marquage au sol 101 discontinue. La voie 111 possède une largeur déterminée sur une première portion de la voie suivie d'une deuxième portion dont la largeur se rétrécie au fur et à mesure du déplacement du véhicule 10 sur cette voie 111.

Un panneau de signalisation routière 11 est arrangé le long de la voie 111, par exemple sur le bord droit de la voie 111. Le panneau de signalisation 11 correspond par exemple à un panneau de type « CEDEZ LE PASSAGE » (de type AB3a, AB3b ou AB5 en France, selon l'Instruction interministérielle sur la signalisation routière de l'arrêté du 7 juin 1977).

Chacune des voies 111 à 113 est matérialisée ou délimitées par des délimitations latérales qui correspondent par exemple à des lignes de marquage au sol, continues ou discontinues.

Les délimitations latérales 100, 101, 102 et 103 sont chacune de type ligne de marquage au sol. Les lignes de marquage au sol sont également appelées signalement horizontal et correspondent en un ensemble de lignes tracées sur le sol. Les lignes de marquage au sol 100, 101, 102 et 103 peuvent être de plusieurs types, par exemple des lignes de rive ou des lignes médianes, avec des caractéristiques différentes. Les lignes de marquage au sol peuvent ainsi être de type ligne continue, ligne discontinue ou ligne mixte (comprenant une ligne continue et une ligne discontinue parallèle à la ligne continue). Une ligne discontinue peut également présenter des caractéristiques différentes, avec des longueurs d'espacement entre les traits variant d'un type de ligne discontinue à l'autre et/ou une longueur des traits variant d'un type à l'autre.

Ainsi, selon l'exemple de la figure 1, la voie d'insertion 111 est délimitée à droite par une ligne continue 100 et à gauche par une ligne discontinue 101. Cette ligne discontinue 101 marque la séparation entre la voie d'insertion 111 et la voie de circulation 112. La voie 112 est délimitée à droite par la ligne 101 et à gauche par une ligne discontinue 102. Cette ligne discontinue 102 marque la séparation entre la voie de circulation 112 et la voie de circulation 113. Enfin, la voie de circulation 113 est délimitée à droite par la ligne 102 et à gauche par une ligne continue 103.

Le véhicule 10 embarque avantageusement un ou plusieurs systèmes d'aide à la conduite, dit ADAS (de l'anglais « Advanced Driver-Assistance System » ou en français « Système d'aide à la conduite avancé »). Par exemple, le véhicule 10 embarque un système de changement semi-automatique de voie de circulation, dit système SALC (de l'anglais « Semi-Automatic Lane Change »). Un tel système se base notamment sur la détection et la reconnaissance des lignes de marquage au sol pour autoriser ou non le changement de voie d'une voie de circulation courante vers une voie de circulation adjacente à cette voie de circulation courante, et lorsque le changement est autorisé, pour contrôler la manœuvre permettant au véhicule 10 de changer de voie.

Le véhicule 10 embarque avantageusement un système de détection de marquage au sol. Un tel système est par exemple couplé au système SALC ou intégré au système SALC. Un tel système de détection de marquage au sol reçoit des données d'une ou plusieurs premières caméras embarquées dans le véhicule 10 et configurées pour l'acquisition d'images de la voie de circulation empruntée par le véhicule 10, par exemple la portion de route située à l'avant et/ou sur les côtés du véhicule 10. Le système de détection de marquage au sol est ainsi configuré pour détecter les marquages au sol dans l'environnement du véhicule 10. Un traitement d'image est appliqué aux images obtenues de la ou les premières caméras du système de détection de marquage au sol pour déterminer la présence de lignes au sol et de classifier ces lignes en différentes catégories, par exemple pour déterminer si les lignes au sol correspondent à des lignes de rive ou des lignes médianes par exemple. Un exemple de traitement d'image pour détecter les lignes au sol est par exemple décrit dans le document WO2017194890A1.

Le véhicule 10 embarque par exemple également un système de détection et de reconnaissance de panneaux de signalisation routières arrangés dans l'environnement 1.

Un tel système correspond par exemple à un système embarqué identifiant les panneaux de signalisation routière disposés dans l'environnement du véhicule 10. L'identification d'un panneau (comprenant la détection et la reconnaissance du panneau) est obtenue en traitant les données de l'environnement devant le véhicule 10 obtenues d'une ou plusieurs deuxièmes caméras, par exemple une caméra frontale (aussi appelée caméra de pare-brise, de l'anglais « Windshield camera »). Les images acquises par cette ou ces caméras sont analysées et traitées pour en déduire des informations utiles à l'identification du panneau de signalisation 11.

Selon une variante, le système d'identification de panneau utilise les données de cartographies routières de l'environnement 1, ces données étant par exemple reçues d'un serveur du « cloud » (ou « nuage » en français) avec lequel le véhicule 10 est relié en communication sans fil ou reçues d'un dispositif de stockage de données de type mémoire embarqué dans le véhicule 10. Ces données sont par exemple également utilisées par un système de navigation embarqué dans le véhicule 10 ou mis en œuvre sur un dispositif de communication mobile (par exemple un téléphone intelligent (de l'anglais « Smartphone »)) avec lequel le véhicule 10 est relié en communication sans fil (par exemple via une connexion de type Wifi^{®} ou Bluetooth^{®}).

Selon encore une variante, la reconnaissance du panneau 11 est obtenue à partir des deux systèmes ci-dessus, par exemple le panneau est identifié via les données obtenues de la deuxième caméra, l'identification étant par exemple confirmée à partir des données de cartographies. Une telle variante permet d'augmenter la confiance dans l'identification du panneau de signalisation 11.

Un problème particulier se pose lorsque le véhicule 10 circule sur une voie déterminée à laquelle est associée un panneau de signalisation, l'information associée au panneau entrainant une restriction sur au moins une fonction d'un système ADAS du véhicule 10.

Par exemple, selon l'exemple particulier de la figure 1, lorsque le véhicule 10 circule sur la voie d'insertion 111 et qu'il détecte le panneau 11 de type « CEDEZ LE PASSAGE », la détection du panneau 11 entraine une interruption de la fonction du système SALC permettant le contrôle par le système SALC d'un changement semi-automatique de voie pendant une distance déterminée (par exemple 400, 500, 600 m). Si le véhicule 10 change de voie sous le contrôle du conducteur pour par exemple passer de la voie d'insertion 111 à la voie de circulation 112 avant que la limite associée à la distance déterminée soit atteinte, la fonction du système SALC reste interrompue ou désactivée jusqu'à ce que le véhicule 10 ait parcouru la distance déterminée. Cela pose un problème puisque, le véhicule 10 circulant alors sur la voie de circulation 112, la restriction associée au panneau 11 ne s'applique plus et un changement de voie semi-automatique depuis la voie 112 vers la voie 113 pourrait être autorisé sous le contrôle du système SALC si l'ensemble des conditions normales associées à un tel changement de voie semi-automatique sont remplies (par exemple présence d'une ligne discontinue entre la voie 112 et la voie 113). Une telle indisponibilité du système SALC peut alors entrainer des interrogations pour le conducteur et limite la conduite du véhicule 10 sous assistance du système SALC.

Le processus décrit ci-après propose une solution à au moins l'un des problèmes ci-dessus.

Un processus de contrôle d'un système ADAS, par exemple du système SALC, du véhicule 10 circulant sur une voie de la route de l'environnement routier 1 est avantageusement mis en œuvre par le véhicule 10, c'est-à-dire par un calculateur ou une combinaison de calculateurs du système embarqué du véhicule 10, par exemple par le ou les calculateurs en charge de contrôler le système ADAS, par exemple le système SALC.

La description du processus est faite en référence à la figure 1, pour un exemple selon lequel les véhicules circulent à droite, avec une voie d'insertion 111 à droite des voies de circulations 112, 113. Le même processus s'applique à un exemple selon lequel les véhicules circulent à gauche, avec une voie d'insertion à gauche des voies de circulations.

Dans une première opération, une première information représentative de détection d'un panneau de circulation déterminé 11 est obtenue.

Le panneau de circulation 11 correspond par exemple à un panneau de type « CEDEZ LE PASSAGE » alors que le véhicule 10 circule sur la voie d'insertion 111.

La première information est par exemple obtenue à partir de :
- données reçues d'une deuxième caméra, par exemple une caméra de type frontale arrangée en haut de pare-brise du véhicule 10, embarquée dans le véhicule 10 ; et/ou
- données de cartographies associées à la route, ces données alimentant par exemple un système de navigation du véhicule 10 ou d'un dispositif de communication mobile relié en communication sans fil avec le véhicule 10 ; les données de cartographies comprennent par exemple des données représentatives de la position géographique du panneau 11, de la voie à laquelle il est associé et du type du panneau.

Dans une deuxième opération, des données représentatives des lignes de marquage au sol latérales délimitant latéralement une voie de circulation courante du véhicule 10 sont reçues au fur et à mesure du déplacement du véhicule 10 sur la route.

La voie de circulation courante varie au cours du temps en fonction du déplacement du véhicule 10 sur la route. Par exemple, la voie courante correspond à un instant initial (correspondant par exemple à l'instant où le panneau 11 est détecté par le véhicule 10) à la voie d'insertion 111, puis la voie courante correspond à un instant postérieur à l'instant initial à la voie de circulation 112. Les données représentatives des lignes de marquage au sol évoluent en fonction du temps au fur et à mesure du déplacement du véhicule 10.

Selon une variante de réalisation, les données reçues sont représentatives de l'ensemble des lignes de marquage au sol présentes dans le champ de vision de la première caméra. Selon cette variante, les données évoluent en fonction du temps au fur et à mesure du déplacement du véhicule 10.

Ces données sont par exemple reçues d'un ou plusieurs capteurs, notamment d'une ou plusieurs premières caméras embarquées dans le véhicule 10, via un ou plusieurs bus de communication du système embarqué du véhicule 10, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458), Ethernet (selon la norme ISO/IEC 802-3) ou LIN (de l'anglais « Local Interconnect Network », ou en français « Réseau interconnecté local »).

Dans une troisième opération, une représentation polynomiale d'une ou plusieurs des lignes de marquage au sol 100 à 103 est déterminée ou calculée à partir des données obtenues de la première caméra à la deuxième opération.

Par exemple, une représentation polynomiale d'une seule ligne de marquage au sol est déterminée à partir de ces données, cette unique ligne de marquage au sol étant appelée ligne de référence. La ligne de référence correspond par exemple à une des lignes délimitant latéralement la voie courante dans laquelle circule le véhicule 10 à l'instant où la représentation polynomiale est déterminée. Par exemple, la ligne de référence correspond à la ligne de marquage au sol délimitant latéralement le côté droit de la voie courante. Selon un autre exemple, la ligne de référence correspond à la ligne de marquage au sol délimitant latéralement le côté gauche de la voie courante.

La représentation polynomiale de cette ligne de référence (ou de l'ensemble des lignes de marquage au sol 100 à 103 dans le champ de vision de la première caméra) est par exemple déterminée au fur et à mesure du déplacement du véhicule 10. Par exemple, cette représentation polynomiale est déterminée à intervalles réguliers, par exemple toutes les 20, 50, 100, 200 ou 500 ms.

La ligne de référence (ou chaque ligne de marquage au sol) est par exemple représentée par un polynôme de degré 3 sous la forme P(x) = C₀ + C₁ * x + C₂ * x² + C₃ * x³, avec C₀, C₁, C₂ et C₃ les coefficients du polynôme, chaque terme C₀, C₁ * x, C₂ * x² et C₃ * x³ du polynôme correspondant à un monôme du polynôme, le terme C0 correspondant au monôme de degré 0 (correspondant à C₀ * x⁰) et C₀ étant le coefficient associé à ce monôme de degré 0. De la même manière, C₁ * x correspond au monôme de degré 1 (avec C₁ son coefficient), C₂ * x² correspond au monôme de degré 2 (avec C₂ son coefficient) et C₃ * x³ correspond au monôme de degré 3 (avec C₃ son coefficient).

Les coefficients C₀, C₁, C₂ et C₃ sont issus de la ou les premières caméras embarquées du véhicule 10 ou du système de détection de marquage au sol utilisant des images issues de cette ou ces caméras.

Le coefficient C₀ représente par exemple une distance entre le centre du véhicule 10 (ou tout autre point de référence du véhicule 10) et chaque délimitation considérée. Le coefficient C₁ représente un angle entre la trajectoire du véhicule 10 et une tangente à la voie de circulation (le cap). Le coefficient C₂ représente un rayon de courbure et le coefficient C₃ représente une dérivée de ce rayon de courbure.

Selon une variante de réalisation, seul le coefficient C₀ est calculé, ce coefficient étant selon cette variante représentatif de la représentation polynomiale associée à la ligne de référence ou à chaque ligne.

Dans une quatrième opération, une deuxième information représentative de détection d'un changement de la ligne de référence au cours du déplacement du véhicule 10 sur la route est déterminée en fonction d'un coefficient de la représentation polynomiale associé au monôme de degré 0 de la représentation polynomiale de la ligne de référence, c'est-à-dire le coefficient C₀.

Cette deuxième information est par exemple obtenue en analysant les variations du coefficient C₀ en fonction du temps. Cette deuxième information correspond par exemple à un bit prenant une première valeur (par exemple '0') lorsqu'aucun changement de ligne de référence n'est détecté et une deuxième valeur (par exemple '1') lorsqu'un changement de ligne de référence est détecté.

Détecter un changement de ligne de référence revient à détecter un changement de repère caméra (c'est-à-dire de la première caméra) pour le véhicule 10, ce qui revient également à détecter un changement de voie courante pour le véhicule 10.

La deuxième information est ainsi représentative d'une variation du coefficient C₀, le cas échéant.

La deuxième information est par exemple obtenue en dérivant une fonction représentative de la variation du coefficient C₀ en fonction du temps.

Un changement de ligne de référence pour le véhicule 10 est détecté ou observé lorsque la variation du coefficient C₀ est supérieure à un seuil déterminé, c'est-à-dire lorsque la dérivée de la fonction représentant l'évolution du coefficient C₀ en fonction du temps est supérieure à un seuil (par exemple supérieure à 0.9 ou supérieure ou égale à 1).

La figure 2 illustre un premier diagramme 21 représentant les variations du coefficient C₀ en fonction du temps (la valeur de C0 étant en ordonnée et la valeur du temps 't' étant en abscisse) et un deuxième diagramme 22 représentant la dérivée 'd' (en ordonnée) de la fonction du diagramme 21 en fonction du temps 't' (en abscisse), selon un exemple de réalisation particulier et non limitatif de la présente invention.

Selon l'exemple particulier de la figure 2, il est observé sur le premier diagramme 21 que C₀ varie peu (variation inférieure à un seuil) entre t0 et t1, et qu'à t1 une brusque variation de C₀ est déterminée.

Cette observation se retrouve sur le diagramme 22 avec une dérivée 'd' égale à 0 (ou proche de 0) sur l'intervalle de temps [t0 ; t1[, et un pic à t1 dont l'amplitude est par exemple égale à '1'.

Cet exemple correspond par exemple au cas de figure où le véhicule 10 circule sur la voie d'insertion 111 sur l'intervalle de temps [t0 ; t1[, t0 correspondant par exemple à l'instant de détection du panneau 11, la ligne de référence correspondant par exemple à la ligne 101. Puis à l'instant t1 le changement de repère caméra est réalisé avec un changement de ligne de référence qui devient la ligne 102. Ce changement de repère caméra traduit un changement de voir pour le véhicule 10 qui passe par exemple de la voie d'insertion 111 à la voie de circulation 112.

Dans une cinquième opération, le système ADAS est contrôlé en fonction de la première déterminée ou obtenue à la première opération et en fonction de la deuxième information déterminée ou obtenue à la quatrième opération.

Par exemple, en prenant l'exemple du contrôle d'un système SALC, la détection du panneau 11 de type « CEDEZ LE PASSAGE » à l'instant t0 déclenche une désactivation de la fonction de changement semi-automatique sur une distance de parcours déterminée pour le véhicule 10 (par exemple égale à 300, 400, 500 ou 600 m). Cela signifie que le véhicule 10 ne pourra pas effectuer de changement semi-automatique de voie sous le contrôle du système SALC avant d'avoir parcouru la distance de parcours déterminée à compter de t0. La distance de parcours déterminée est par exemple convertie en une durée (en secondes) en prenant en considération la vitesse du véhicule 10, par exemple la vitesse moyenne, la distance étant égale au produit de la vitesse par le temps.

A l'instant t1, lorsque le changement de ligne de référence (donc de voie de circulation courante pour le véhicule 10) est détecté via la deuxième information, et si le véhicule 10 n'a pas parcouru la totalité de la distance de parcours déterminé (c'est-à-dire la durée de l'intervalle de temps entre t0 et t1 est inférieure à la durée de parcours nécessaire au véhicule 10 pour parcourir la distance de parcours déterminé en fonction de sa vitesse), alors la fonction de changement semi-automatique de voie du système SALC est réactivée, avant que le véhicule 10 n'est atteint la limite de la distance de parcours déterminée. Cela permet ainsi au conducteur du véhicule 10 de requérir un changement semi-automatique de voie (par exemple vers la voie 113), par exemple en activant les clignotants gauches du véhicule 10, si l'ensemble des conditions autorisant un tel changement semi-automatique de voie sont remplies.

Un tel exemple correspond à un cas de figure selon lequel le conducteur du véhicule 10 effectue un changement de voie sous contrôle manuel depuis la voie d'insertion 111 vers la voie 112 avant d'atteindre la fin de la voie d'insertion 111.

A contrario, si aucun changement de voie de circulation n'est détecté via la deuxième information, alors la fonction de changement semi-automatique de voie du système SALC reste inactive jusqu'à ce que le véhicule 10 ait parcouru l'intégralité de la distance de parcours déterminé. Lorsque le véhicule 10 a parcouru cette distance, la fonction du système SALC est réactivée automatiquement.

Selon un autre exemple de réalisation, le système ADAS correspond à un système ACC. Selon cet autre exemple, la fonction de régulation adaptative de vitesse est désactivée à la détection du panneau 11, pour une distance de parcours déterminée. La fonction est alors réactivée lorsqu'un changement de ligne de référence est détecté, comme expliqué ci-dessus.

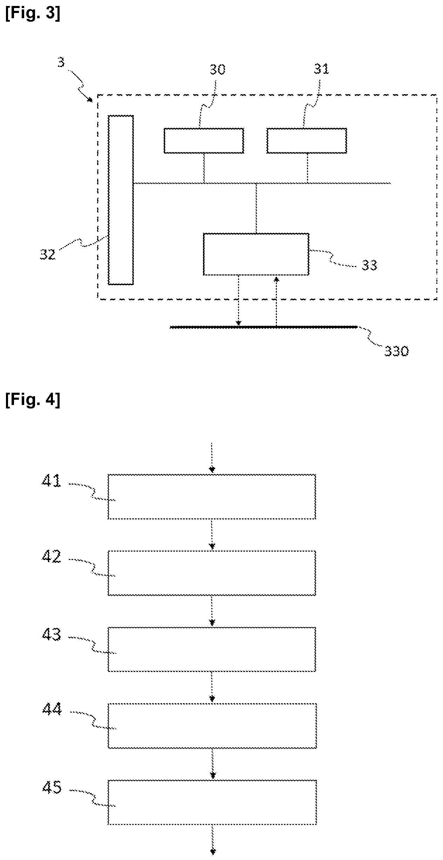

La figure 3 illustre schématiquement un dispositif 3 configuré pour contrôler un système ADAS, par exemple un système SALC et/ou un système ACC, selon un exemple de réalisation particulier et non limitatif de la présente invention. Le dispositif 3 correspond par exemple à un dispositif embarqué dans le véhicule 10, par exemple un calculateur.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent (de l'anglais « smartphone »), une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes, par exemple un serveur distant ou le « cloud », ou le véhicule 10 lorsque le dispositif 3 correspond à un téléphone intelligent ou une tablette par exemple. Les éléments d'interface du bloc 32 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Selon un autre exemple de réalisation particulier et non limitatif, le dispositif 3 comprend une interface de communication 33 qui permet d'établir une communication avec d'autres dispositifs (tels que d'autres calculateurs du système embarqué ou des capteurs embarqués) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458), Ethernet (standardisé par la norme ISO/IEC 802-3) ou LIN (de l'anglais « Local Interconnect Network », ou en français « Réseau interconnecté local »).

Selon un exemple de réalisation particulier et non limitatif, le dispositif 3 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'un système d'aide à la conduite, dit système ADAS, par exemple un système SALC et/ou un système ACC, d'un véhicule circulant sur route comprenant plusieurs voies ayant un même sens de circulation, selon un exemple de réalisation particulier et non limitatif de la présente invention. Le procédé est par exemple mis en œuvre par un dispositif embarqué dans le véhicule 10 ou par le dispositif 3 de la figure 3.

Dans une première étape 41, une première information représentative de détection d'un panneau de circulation déterminé est obtenue.

Dans une deuxième étape 42, des données représentatives de lignes de marquage au sol latérales délimitant latéralement une voie de circulation courante du véhicule sont reçues au cours d'un déplacement du véhicule sur la route.

Dans une troisième étape 43, une représentation polynomiale d'une ligne de marquage au sol, dite ligne de référence, est déterminée en fonction des données au cours du déplacement du véhicule, la ligne de référence correspondant à une des lignes de marquage au sol latérales d'un côté déterminé du véhicule.

Dans une quatrième étape 44, une deuxième information représentative de détection d'un changement de la ligne de référence au cours du déplacement du véhicule est déterminée en fonction d'un coefficient de la représentation polynomiale associé au monôme de degré 0 de la représentation polynomiale.

Dans une cinquième étape 45, le système ADAS est contrôlé en fonction de la première information et de la deuxième information.

Selon une variante, les variantes et exemples des opérations décrits en relation avec les figures 1 et 2 s'appliquent aux étapes du procédé de la figure 4.

Bien entendu, la présente invention ne se limite pas aux exemples de réalisation décrits ci-avant mais s'étend à un procédé de détection d'un changement de voie de circulation pour un véhicule qui inclurait des étapes secondaires sans pour cela sortir de la portée de la présente invention. Il en serait de même d'un dispositif configuré pour la mise en œuvre d'un tel procédé.

La présente invention concerne également un système ADAS, par exemple un système SALC, comprenant le dispositif 3 de la figure 3.

La présente invention concerne également un véhicule, par exemple automobile ou plus généralement un véhicule autonome à moteur terrestre, comprenant le dispositif 3 de la figure 3 ou le système ADAS, par exemple SALC, ci-dessus.

## Revendications

1. Procédé de contrôle d'un système d'aide à la conduite, dit système ADAS correspondant à un système de changement semi-automatique de voie, dit système SALC, d'un véhicule (10), ledit véhicule (10) circulant sur une route comprenant une pluralité de voies (111, 112, 113) ayant un même sens de circulation, ledit procédé comprenant les étapes suivantes :
- obtention (41) d'une première information représentative de détection d'un panneau de circulation (11) déterminé ;
- réception (42) de données représentatives de lignes de marquage au sol latérales (100, 101 ; 101, 102) délimitant latéralement une voie de circulation courante (111 ; 112) dudit véhicule (10) au cours d'un déplacement dudit véhicule (10) sur ladite route ;
- détermination (43) d'une représentation polynomiale d'une ligne de marquage au sol (101 ; 102), dite ligne de référence, en fonction desdites données au cours dudit déplacement dudit véhicule (10), ladite ligne de référence correspondant à une desdites lignes de marquage au sol latérales d'un côté déterminé dudit véhicule ;
dans lequel :
- détermination (44) d'une deuxième information représentative de détection d'un changement de ladite ligne de référence au cours dudit déplacement dudit véhicule (10) en fonction d'un coefficient de ladite représentation polynomiale associé au monôme de degré 0 de ladite représentation polynomiale ;
- désactivation dudit système ADAS pour une distance déterminée de parcours dudit véhicule (10) lorsque ladite première information est représentative de détection d'un panneau de circulation de type « CEDEZ LE PASSAGE » ; et
- réactivation dudit système ADAS lorsqu'un changement de ligne de référence est détecté via ladite deuxième information suivant ladite désactivation dudit système ADAS.

2. Procédé selon la revendication 1, pour lequel ladite deuxième information est représentative d'une variation dudit coefficient.

3. Procédé selon la revendication 2, pour lequel ladite deuxième information est obtenue en dérivant une fonction représentative de la variation dudit coefficient en fonction du temps.

4. Procédé selon la revendication 2 ou 3, pour lequel un changement de ligne de référence pour ledit véhicule (10) est détecté lorsqu'une amplitude de ladite variation est supérieure à un seuil.

5. Procédé selon l'une des revendications 1 à 4, pour lequel lesdites données sont reçues d'une première caméra embarquée dans ledit véhicule (10).

6. Procédé selon l'une des revendications 1 à 5, pour lequel ladite première information est obtenue à partir de :
- données reçues d'une deuxième caméra embarquée dans ledit véhicule (10) ; et/ou
- données de cartographies associées à ladite route.

7. Programme d'ordinateur comportant des instructions pour la mise en œuvre du procédé selon l'une quelconque des revendications précédentes, lorsque ces instructions sont exécutées par un processeur.

8. Dispositif (3) de contrôle d'un système d'aide à la conduite, dit système ADAS, d'un véhicule, ledit dispositif (3) comprenant une mémoire (31) associée à au moins un processeur (30) configuré pour la mise en œuvre des étapes du procédé selon l'une quelconque des revendications 1 à 6.

9. Véhicule (10) comprenant le dispositif (3) selon la revendication 8.

## Patentansprüche

1. Verfahren zum Steuern eines Fahrassistenzsystems, ADAS-System genannt, das einem halbautomatischen Spurwechselsystem, SALC-System genannt, eines Fahrzeugs (10) entspricht, wobei das Fahrzeug (10) auf einer Autobahn fährt, die eine Vielzahl von Fahrspuren (111, 112, 113) mit der gleichen Verkehrsrichtung umfasst, wobei das Verfahren die folgenden Schritte umfasst:
Erhalten (41) einer ersten Information, die für die Erfassung eines bestimmten Verkehrszeichens (11) repräsentativ ist;
- Empfangen (42) von Daten, die für seitliche Bodenmarkierungslinien (100, 101; 101, 102) repräsentativ sind, die einen Strom seitlich begrenzen Fahrspur (111; 12) des Fahrzeugs (10) während einer Bewegung auf der (10
- bestimmenden (43) Polynomdarstellung einer Bodenmarkierungslinie (101; 102), die als Referenzlinie bezeichnet wird, als Funktion der Daten während der Bewegung des Fahrzeugs (10), wobei die Referenzlinie einer der seitlichen Bodenmarkierungslinien einer bestimmten Seite des Fahrzeugs entspricht;
in der:
- Bestimmung (44) einer zweiten Information, die für die Erfassung einer Änderung der Bezugslinie während der Bewegung des Fahrzeugs (10) repräsentativ ist, als Funktion eines Koeffizienten der Polynomdarstellung, die mit dem Monomal der Polynomdarstellung der Stufe 0 assoziiert ist;
- Deaktivierung des ADAS-Systems für eine bestimmte Fahrstrecke des Fahrzeugs (10), wenn die erste Information für die Erfassung eines Verkehrszeichens des Typs "VORFAHRT GEWÄHREN" repräsentativ ist; und
- Reaktivierung des ADAS-Systems, wenn eine Änderung der Bezugslinie über die zweite Information nach der Deaktivierung des ADAS-Systems erfasst wird.

2. Verfahren nach Anspruch 1, wobei die zweite Information eine Variation des Koeffizienten darstellt.

3. Verfahren nach Anspruch 2, wobei die zweite Information erhalten wird, indem eine Funktion abgeleitet wird, die für die Variation des Koeffizienten als Funktion der Zeit repräsentativ ist.

4. Verfahren nach Anspruch 2 oder 3, wobei eine Änderung der Bezugslinie für das Fahrzeug (10) erfasst wird, wenn eine Amplitude der Änderung größer als ein Schwellenwert ist.

5. Verfahren nach einem der Ansprüche 1 bis 4, bei dem die Daten von einer ersten Kamera an Bord des Fahrzeugs (10) empfangen werden.

6. Verfahren nach einem der Ansprüche 1 bis 5, bei dem die erste Information erhalten wird aus:
- Daten, die von einer zweiten Kamera an Bord des Fahrzeugs (10) empfangen werden; und/oder
- Kartierungsdaten, die der Straße zugeordnet sind.

7. Computerplan, der Anweisungen für die Implementierung des Verfahrens nach einem der vorhergehenden Ansprüche umfasst, wenn diese Anweisungen von einem Prozessor ausgeführt werden.

8. Vorrichtung (3) zum Steuern eines Fahrassistenzsystems, das als ADAS-System bezeichnet wird, eines Fahrzeugs, wobei die Vorrichtung (3) einen Speicher (31) aufweist, der mit mindestens einem Prozessor (30) verbunden ist, der zum Implementieren der Schritte des Verfahrens nach einem der Ansprüche 1 bis 6 konfiguriert ist.

9. Fahrzeug (10) mit der Vorrichtung (3) nach Anspruch 8.

## Claims

1. Method for controlling a driving aid system, called ADAS system corresponding to a semi-automatic lane change system, called SALC system, of a vehicle (10), said vehicle (10) travelling on a highway comprising a plurality of lanes (111, 112, 113) having the same traffic direction, said method comprising the steps of:
obtaining (41) a first piece of information representative of detection of a determined traffic sign (11);
- receipt (42) of data representative of lateral ground marking lines (100, 101; 101, 102) laterally delimiting a current traffic lane (111; 12) of said vehicle (10) during a movement on said (10
- determining (43) a polynomial representation of a ground marking line (101; 102), referred to as a reference line, as a function of said data during said movement of said vehicle (10), said reference line corresponding to one of said lateral ground marking lines of a determined side of said vehicle;
in which:
- determination (44) of a second piece of information representative of detection of a change of said reference line during said movement of said vehicle (10) as a function of a coefficient of said polynomial representation associated with the level 0 monomial of said polynomial representation;
- deactivation of said ADAS system for a determined travel distance of said vehicle (10) when said first piece of information is representative of detection of a traffic sign of the « GIVE WAY » type; and
- reactivation of said ADAS system when a change of reference line is detected via said second piece of information following said deactivation of said ADAS system.

2. Method according to claim 1, wherein said second information is representative of a variation of said coefficient.

3. Method according to claim 2, wherein said second information is obtained by deriving a function representative of the variation of said coefficient as a function of time.

4. Method according to claim 2 or 3, wherein a change of reference line for said vehicle (10) is detected when an amplitude of said variation is greater than one threshold.

5. Method according to one of claims 1 to 4, for which said data are received from a first camera on board said vehicle (10).

6. Method according to one of claims 1 to 5, for which said first piece of information is obtained from:
- data received from a second camera on board said vehicle (10); and/or
- mapping data associated with said road.

7. Computer plan comprising instructions for the implementation of the method according to any one of the previous claims, when these instructions are executed by a processor.

8. Device (3) for controlling a driving assistance system, called ADAS system, of a vehicle, said device (3) comprising a memory (31) associated with at least one processor (30) configured for implementing the steps of the method according to any one of claims 1 to 6.

9. Vehicle (10) comprising the device (3) according to claim 8.
